# EUROPEAN PATENT APPLICATION

(11) **EP 2 645 621 A1**
(43) Date of publication of application: **02.10.2013**
(21) Application number: 13161219.4
(22) Date of filing: 27.03.2013
(51) Int. Cl.: H04L 12/12, H04L 12/10, H04L 12/40

(54) **Network apparatus**

(30) Priority: 27.03.2012 JP 2012071778
(71) Applicant: Funai Electric Co., Ltd., Nakagaito Daito-shi Osaka 574-0013 (JP)
(72) Inventor: Kitagawa, Kazuto, Daito-shi, Osaka 574-0013 (JP)
(74) Representative: Grünecker, Kinkeldey, Stockmair & Schwanhäusser

(57) **Abstract**

A network apparatus includes a network cable connector, a communication signal processing circuit, and a binarizing circuit. The network cable connector is configured to be connected to a network cable. The communication signal processing circuit is configured to receive a signal inputted through the network cable connector. The binarizing circuit is configured to compare the signal inputted through the network cable connector to the communication signal processing circuit with a specific reference potential such that the binarizing circuit is configured to binarize the signal to output one of first and second potentials. The second potential is different from the first potential. The communication signal processing circuit is configured to be switched on and off according to the one of first and second potentials outputted from the binarizing circuit.

## Description

### CROSS-REFERENCE TO RELATED APPLICATIONS

This application claims priority to Japanese Patent Application No. 2012-071778 filed on March 27, 2012. The entire disclosure of Japanese Patent Application No. 2012-071778 is hereby incorporated herein by reference.

### BACKGROUND

### Field of the Invention

The present invention generally relates to a network apparatus. More specifically, the present invention relates to a network apparatus having a network cable connector.

### Background Information

A network apparatus having a network cable connector is conventionally known (see Japanese Laid-Open Patent Application Publication H11-88352 (Patent Citation 1), for example).

The Patent Citation 1 discloses a LAN interface (e.g., a network apparatus) including a connection port (e.g., a network cable connector) to which a LAN (Local Area Network) cable is connected, and a link pulse detector that detects link pulses inputted from the LAN cable through the connection port. Here, the link pulses are signals periodically sent and received through the LAN cable even when no data is being sent or received. With this LAN interface, when a link pulse is detected by the link pulse detector, it is determined that a LAN cable has been connected, and the power supply of the LAN interface is switched from its off state to its on state. Since a link pulse is a signal in which an H level and an L level are repeated at specific time intervals, a timer or the like is needed to detect link pulses. Accordingly, a link pulse detector is formed a microprocessor or the like.

### SUMMARY

It has been discovered that with the LAN interface discussed in the Patent Citation 1, since the link pulse detector used to detect link pulses is formed by a microprocessor or the like, there can be a problem in that power consumption is relatively high.

One object of the present disclosure is to provide a network apparatus that is more efficient in its power consumption.

In view of the state of the know technology, a network apparatus includes a network cable connector, a communication signal processing circuit, and a binarizing circuit. The network cable connector is configured to be connected to a network cable. The communication signal processing circuit is configured to receive a signal inputted through the network cable connector. The binarizing circuit is configured to compare the signal inputted through the network cable connector to the communication signal processing circuit with a specific reference potential such that the binarizing circuit is configured to binarize the signal to output one of first and second potentials. The second potential is different from the first potential. The communication signal processing circuit is configured to be switched on and off according to the one of first and second potentials outputted from the binarizing circuit.

Other objects, features, aspects and advantages of the present disclosure will become apparent to those skilled in the art from the following detailed description, which, taken in conjunction with the annexed drawings, discloses selected embodiments of a network apparatus.

### BRIEF DESCRIPTION OF THE DRAWINGS

Referring now to the attached drawings which form a part of this original disclosure:

FIG. 1 is a block diagram of an overall configuration of a BD player in accordance with a first embodiment;

FIG. 2 is a waveform diagram of a link pulse inputted to the BD player illustrated in FIG. 1;

FIG. 3 is a waveform diagram of a signal outputted from an op-amp of the BD player illustrated in FIG. 1;

FIG. 4 is a waveform diagram of a signal outputted from an LPF of the BD player illustrated in FIG. 1; and

FIG. 5 is a block diagram of an overall configuration of a BD player in accordance with a second embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

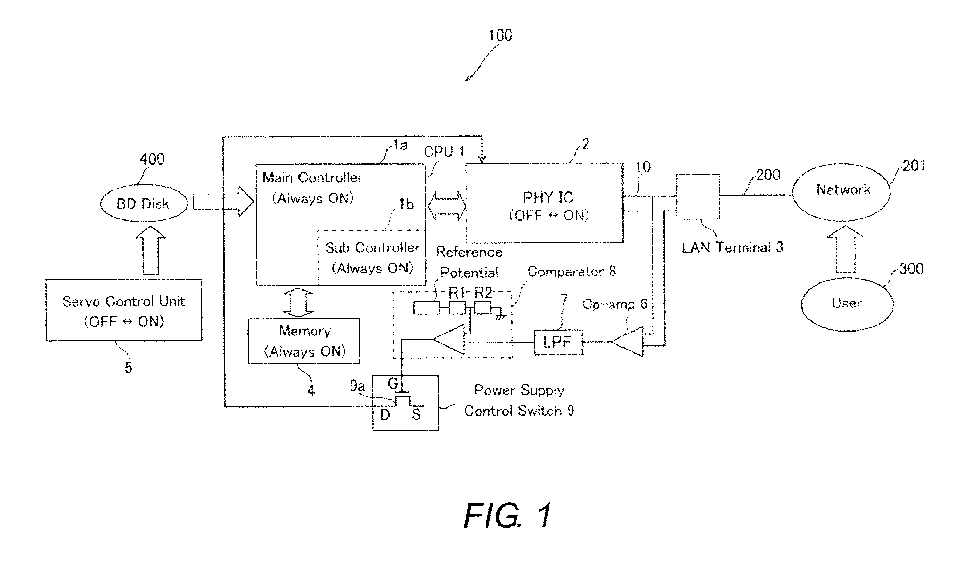

Referring initially to FIG. 1, a BD player 100 is illustrated in accordance with a first embodiment. The BD player 100 is an example of a "network apparatus."

As shown in FIG. 1, the BD player 100 in accordance with the first embodiment includes a CPU 1, a PHY IC (Physical Layer Integrated Circuit or physical interface) 2, a LAN (Local Area Network) terminal 3, a memory 4, a servo control unit 5, an op-amp 6, a low-pass filter (LPF) 7, a comparator 8, and a power supply control switch 9. The BD player 100 is configured to be actuated by a signal (e.g., power on signal) inputted by a user 300 through a network 201 and a LAN cable 200. The CPU 1 is an example of a "controller." The PHY IC 2 is an example of a "communication signal processing circuit." The LAN terminal 3 is an example of a "network cable connector" and a "local area network cable connector." The op-amp 6 and the LPF 7 are examples of an "amplifier" and a "direct current conversion circuit," respectively. The comparator 8 is an example of a "binarizing circuit."

The LAN terminal 3 is configured to be connected to the LAN cable 200. The LAN terminal 3 is also connected to the PHY IC 2 via a pair of signal wires 10. The LAN cable 200 is an example of a "network cable."

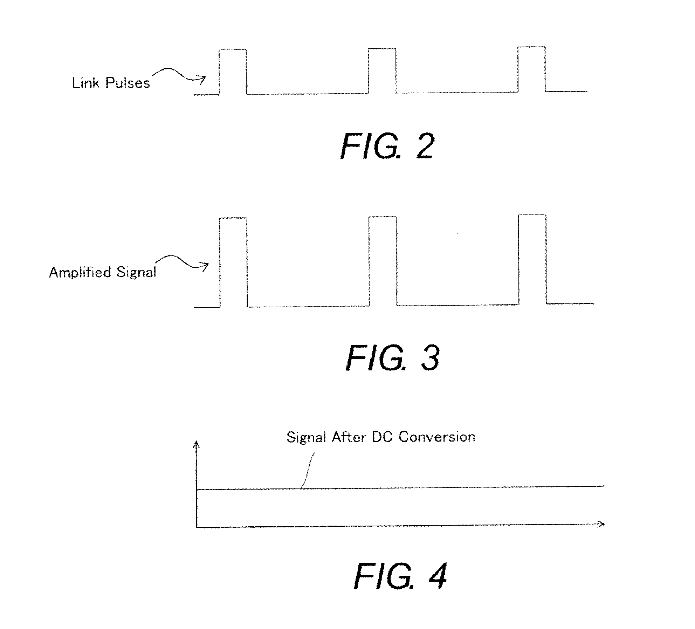

The PHY IC 2 is connected to the LAN terminal 3 and the CPU 1. The PHY IC 2 is configured to receive a signal inputted through the LAN terminal 3. More specifically, the PHY IC 2 is configured to send and receive network signals, such as link pulses shown in FIG. 2, inputted from the LAN terminal 3 to the physical layer. In other words, the signal inputted through the LAN terminal 3 includes the link pulses. The link pulses are differential signals that is transmitted using the pair of the signal wires 10. The link pulses are periodically sent and received even when no data is being sent or received. The PHY IC 2 is configured to be in its off state when the LAN cable 200 is not connected to the LAN terminal 3.

The CPU 1 is configured control the PHY IC 2, the memory 4, and the servo control unit 5. The GPU 1 is also configured such that information read from a BD disk 400 is inputted. The CPU 1 includes a main controller 1a and a sub-controller 1b. Power is always supplied to the main controller 1a and the sub-controller 1b (i.e., turn on state) irrelevant to the connection state of the LAN cable 200 to the LAN terminal 3. In the illustrated embodiment, the CPU 1 controls the servo control unit 5 to read information from the BD disk 400 or store information in the BD disk 400.

In the illustrated embodiment, the op-amp 6 is disposed between the LPF 7 and the signal wires 10 that electrically connect the LAN terminal 3 and the PHY IC 2. More specifically, the input side of the op-amp 6 is connected to the pair of the signal wires 10, and the output side of the op-amp 6 is connected to the LPF 7. The op-amp 6 has the function of amplifying (see FIG. 3) by combining the link pulses inputted from the LAN cable 200 through the LAN terminal 3.

In the illustrated embodiment, the LPF 7 is disposed between the LAN terminal 3 (or the op-amp 6) and the comparator 8. More specifically, the input side of the LPF 7 is connected to the output side of the op-amp 6, while the output side of the LPF 7 is connected to the input side of the comparator 8. The LPF 7 is configured to convert the signal outputted from the op-amp 6 into direct current (e.g., integration of current) as illustrated in FIG. 4. Then, this product or direct current is inputted to the comparator 8.

The comparator 8 is connected to the output side of the LPF 7. The output side of the comparator 8 is connected to the power supply control switch 9 with an FET (Field-Effect Transistor) 9a. The comparator 8 includes a reference potential (e.g., a specific reference potential) and resistors R1 and R2. In the illustrated embodiment, the comparator 8 is configured to compare the signal inputted from the output side of the LPF 7 through the LAN terminal 3 with the reference potential, and thereby binarizing to an H-level (e.g., a high level) or an L-level (e.g., a low level) and outputting the result. In other words, the comparator 8 is configured to compare the signal inputted through the LAN terminal 3 to the PHY IC 2 with the reference potential such that the comparator 8 is configured to binarize the signal to output one of the H-level and the L-level. The L-level has a lower potential than the H-level.

In the illustrated embodiment, the power supply control switch 9 is disposed between the comparator 8 and the PHY IC 2. The power supply control switch 9 is configured to receive the one of the H-level and L-level potential outputted from the comparator 8. The power supply control switch 9 includes one FET 9a for switching the PHY IC 2 on and off. A gate G of the FET 9a is connected to the output side of the comparator 8, while a source S of the FET 9a is connected to a power supply (not shown). A drain D of the FET 9a is connected to the PHY IC 2.

In the illustrated embodiment, the PHY IC 2 is configured to be switched on and off based on the H-level or L-level potential outputted from the comparator 8. More specifically, when an H-level potential is outputted from the comparator 8, the FET 9a of the power supply control switch 9 is switched on, which supplies voltage to the PHY IC 2 and switches on the PHY IC 2. In other words, the PHY IC 2 is switched on while the comparator 8 outputs the H-level potential. On the other hand, when an L-level potential is outputted from the comparator 8, the FET 9a of the power supply control switch 9 is switched off, which halts the supply of voltage to the PHY IC 2 and switches off the PHY IC 2. In other words, the PHY IC 2 is switched off while the comparator 8 outputs the L-level potential.

The operation in response to the LAN cable 200 being connected to the LAN terminal 3 of the BD player 100 will be described through reference to FIGS. 1 to 4.

First, in a state in which the LAN cable 200 has not been connected to the LAN terminal 3 of the BD player 100, the PHY IC 2 and the servo control unit 5 are in their off state. The CPU 1 (e.g., the main controller 1a and the sub-controller 1b) and the memory 4 are always in their on state.

Next, when the LAN cable 200 is connected to the LAN terminal 3 of the BD player 100, as shown in FIG. 2, link pulses are sent and received from the pair of the signal wires 10. The link pulses are then inputted to the op-amp 6, which amplifies the signal as shown in FIG. 3. The link pulses are also inputted to the PHY IC 2.

Next, the signal amplified by the op-amp 6 is inputted to the LPF 7, which converts the signal into direct current as shown in FIG. 4. The resulting DC signal is inputted to the comparator 8 and compared with the reference potential. If the DC signal is larger than the size of the reference potential, the H-level signal is outputted from the comparator 8. The reference potential is set in advance such that in a state in which the LAN cable 200 is connected to the LAN terminal 3 of the BD player 100 and link pulses are being sent and received, the size or amplitude of the DC signal outputted from the LPF 7 will be larger than that of the reference potential. Therefore, when the LAN cable 200 is connected to the LAN terminal 3, the H-level signal is outputted from the comparator 8.

Next, the H-level signal outputted from the comparator 8 is inputted to the gate G of the FET 9a of the power supply control switch 9, which puts the FET 9a in its on state. Consequently, power is supplied to the PHY IC 2, and the PHY IC 2 enters its on state. After this, the servo control unit 5 enters its on state at a command from the main controller 1a.

In the illustrated embodiment, the BD player 100 includes the LAN terminal 3 (e.g., the network cable connector) to which the LAN cable 200 (e.g., the network cable) is connected, the PHY IC 2 (e.g., the communication signal processing circuit) to which the signal is inputted through the LAN terminal 3, and the comparator 8 (e.g., the binarizing circuit) that compares the signal inputted through the LAN terminal 3 to the PHY IC 2 with a specific reference potential, and thereby binarizes the signal to the H-level (e.g., the first potential) or to the L-level (e.g., the second potential) that is different from or lower than the H-level. The PHY IC 2 is configured to be switched on and off according to the H-level or L-level signal outputted from the comparator 8.

With this BD player 100, as discussed above, the comparator 8 is provided to compare a signal inputted through the LAN terminal 3 with the reference potential, and thereby binarizing the signal to an H-level or an L-level and outputting the result. The PHY IC 2 is configured to be switched on and off based on the H-level or L-level outputted from the comparator 8. Consequently, unlike when the PHY IC 2 is switched on and off by using a microprocessor to detect link pulses inputted through the LAN terminal 3, the PHY IC 2 can be switched on and off based on the output of the comparator 8, which uses relatively little power. Thus, more efficient power consumption becomes possible.

Also, in the illustrated embodiment, as discussed above, the LPF 7 for converting the signal inputted to the comparator 8 into direct current is provided between the LAN terminal 3 and the comparator 8. The comparator 8 is configured to compare with the reference potential the signal that has undergone direct current conversion by the LPF 7, and thereby binarizing the signal to the H-level or the L-level and outputting the result. Consequently, since the signal that has undergone direct current conversion by the LPF 7 is inputted to the comparator 8, it can be compared with the reference potential, which makes it easy to binarize the signal inputted to the comparator 8 to the H-level or the L-level and output the result. Also, this LPF 7 consumes less power than a microprocessor, so power efficiency can be improved.

Also, in the illustrated embodiment, as discussed above, the signal outputted via the LAN terminal 3 is the differential signal transmitted through the pair of the signal wires 10. The op-amp 6 is provided between the LAN terminal 3 and the LPF 7 for amplifying the differential signal inputted through the LAN terminal 3. Consequently, link pulses transmitted through the pair of the signal wires 10 can be combined by the op-amp 6, which allows the link pulses inputted through the LAN terminal 3 to be easily amplified.

Also, in the illustrated embodiment, as discussed above, the power supply control switch 9 to which is inputted the H-level or L-level potential outputted from the comparator 8 is provided between the comparator 8 and the PHY IC 2. The PHY IC 2 is configured to be switched on and off by the power supply control switch 9. Consequently, the PHY IC 2 can be quickly switched on and off by the power supply control switch 9, which switches on or off depending on the H-level or L-level potential outputted from the comparator 8.

In the illustrated embodiment, as discussed above, the LAN terminal 3 is an example of the local area network cable connector. The local area network cable connector is an example of the network cable connector. The PHY IC 2 (e.g., the communication signal processing circuit) is connected to the LAN terminal 3, and is configured to process the signal inputted through the LAN terminal 3 to the physical layer. With this configuration, when the LAN cable 200 (e.g., the local area network cable) is not connected to the LAN terminal 3, the PHY IC 2 that processes the signal inputted to the physical layer can be switched off. Thus, power efficiency can be easily improved.

### SECOND EMBODIMENT

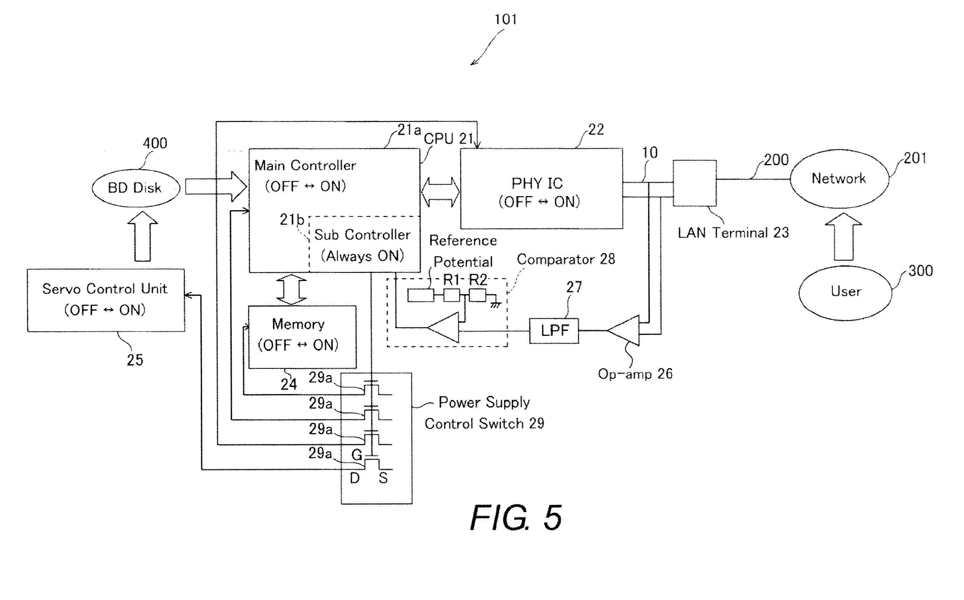

Referring now to FIG. 5, a BD player 101 is illustrated in accordance with a second embodiment. In view of the similarity between the first and second embodiments, the parts of the second embodiment that are identical to the parts of the first embodiment will be given the same reference numerals as the parts of the first embodiment. Also, parts of this second embodiment that are functionally identical and/or substantially identical to parts of the first embodiment will be given the same reference numerals but with "20" added thereto. In any event, the descriptions of the parts of the second embodiment that are substantially identical to the parts of the first embodiment may be omitted for the sake of brevity. However, it will be apparent to those skilled in the art from this disclosure that the descriptions and illustrations of the first embodiment also apply to this second embodiment, except as discussed and/or illustrated herein.

Referring to FIG. 5, the BD player 101 is configured such that the output of a comparator 28 is inputted to a sub-controller 21b of a CPU 21, unlike in the first embodiment above in which the output of the comparator 8 is inputted to the gate G of the FET 9a of the power supply control switch 9.

As shown in FIG. 5, the BD player 101 in accordance with the second embodiment includes the CPU 21, a PHY IC 22, a LAN terminal 23, a memory 24, a servo control unit 25, an op-amp 26, an LPF 27, the comparator 28, and a power supply control switch 29. With the BD player 101, the output side of the comparator 28 is connected to the sub-controller 21b of the CPU 21. The sub-controller 21b of the CPU 21 is connected to the gates G of a plurality of FETs 29a of the power supply control switch 29. A different voltage is supplied to each of the PHY IC 22, the memory 24, the servo control unit 25, and a main controller 21a of the CPU 21. The plurality of the FETs 29a is provided to the power supply control switch 29. The drains D of the FETs 29a of the power supply control switch 29 are connected to the memory 24, the servo control unit 25, the main controller 21a of the CPU 21, and the PHY IC 22, respectively. The sources S of the FETs 29a are connected to a power supply (not shown). In other words, in the illustrated embodiment, the power supply control switch 29 is disposed between the sub-controller 21b of the CPU 21 and the PHY IC 22, and receives the signal (e.g., control signal) outputted from the sub-controller 21b of the CPU 21. Furthermore, the PHY IC 22 is switched on and off by the power supply control switch 29. The CPU 21 is an example of a "controller." The PHY IC 22 is an example of a "communication signal processing circuit." The LAN terminal 23 is an example of a "network cable connector" and a "local area network cable connector." The main controller 21a of the CPU 21, the memory 24, and the servo control unit 25 are examples of an "electric device." The op-amp 26 and the LPF 27 are examples of an "amplifier" and a "direct current conversion circuit," respectively. The comparator 8 is an example of a "binarizing circuit." The rest of the configuration in the second embodiment is the same as in the first embodiment above.

Next, the operation in response to the LAN cable 200 being connected to the LAN terminal 23 of the BD player 101 will be described through reference to FIG. 5.

First, in a state in which the LAN cable 200 has not been connected to the LAN terminal 23 of the BD player 101, the PHY IC 22, the servo control unit 25, the main controller 21a of the CPU 21, and the memory 24 are in their off state. The sub-controller 21b of the CPU 21 is always in its on state irrelevant to the connection state of the LAN cable 200 to the LAN terminal 23.

The operation from when the LAN cable 200 is connected to the LAN terminal 23 of the BD player 101 until an H-level signal is outputted from the comparator 28 is the same as in the first embodiment above. The H-level signal outputted from the comparator 28 is inputted to the sub-controller 21b of the CPU 21. The H-level signal is then inputted from the sub-controller 21b of the CPU 21 to the gates G of the FETs 29a of the power supply control switch 29. As a result, the FETs 29a enter their on state, and the memory 24, the servo control unit 25, the main controller 21a of the CPU 21, and the PHY IC 22 also go into their on state. Thus, the memory 24, the servo control unit 25, the main controller 21a of the CPU 21. and the PHY IC 22 are switched on while the comparator 28 outputs the H-level signal, and are switched off while the comparator 28 outputs the L-level signal.

In the illustrated embodiment, as discussed above, the CPU 21 (e.g., the sub-controller 21b) is provided to which an H-level or L-level potential outputted from the comparator 28 is inputted, and which controls the on and off switching of the PHY IC 22. The PHY IC 22 is configured to be switched on and off based on the signal outputted from the CPU 21 according to the inputted H-level or L-level. Consequently, not only the PHY IC 22, but also the main controller 21a of the CPU 21, and the servo control unit 25 and the memory 24 other than the PHY IC 22 controlled by the CPU 21 can be switched on and off based on the signal outputted from the CPU 21 (e.g., the sub-controller 21b).

Also, in the illustrated embodiment, as discussed above, the CPU 21 includes the main controller 21a and the sub-controller 21b to which is inputted the H-level or L-level potential outputted from the comparator 28. The BD player 101 further includes the electric device (e.g., the memory 24 and the servo control unit 25) that is controlled by the main controller 21a. In other words, the main controller 21a controls the electric device. The main controller 21a, the memory 24, and the servo control unit 25 are configured to be switched on and off based on the signal outputted from the sub-controller 21b according to the inputted H-level or L-level potential. In other words, the sub-controller 21b receives the one of the H-level and L-level potentials outputted from the comparator 28. Consequently, when the main controller 21a, the memory 24, and the servo control unit 25 are not needed, they can be switched off, which affords better power efficiency.

The embodiments disclosed herein are merely examples in all respects and should not be considered to be limiting in nature. The scope of the invention is defined not by the description of the embodiments above, but by the appended claims, and encompasses all modifications as defined by the appended claims and their equivalents.

For example, in the first and second embodiments above, the BD players 100 and 101 are illustrated as an example of the network apparatus of the present application. However, the present application is not limited to this. For example, the present application can also be applied to liquid crystal television sets, BD/DVD recorders, and other devices besides a BD player that can be connected to a LAN.

Also, in the first and second embodiments above, the signals outputted from the LPFs 7 and 27 are binarized and set to the H-level or the L-level by being inputted to the comparators 8 and 28, respectively. However, the present application is not limited to this. For example, the signals outputted from the LPFs 7 and 27 can be binarized by an electronic circuit other than a comparator.

Also, in the first and second embodiments above, the signals outputted from the op-amps 6 and 26 are converted into direct current by the LPFs 7 and 27, respectively. However, the present application is not limited to this. For example, the signals outputted from the op-amps 6 and 26 can be converted into direct current by an electronic circuit other than an LPF.

Also, in the first and second embodiments above, the link pulses inputted from the LAN terminals 3 and 23 are inputted to the LPFs 7 and 27, respectively, after first being amplified by the op-amps 6 and 26, respectively. However, the present application is not limited to this. For example, the link pulses can be inputted directly to the LPFs 7 and 27, respectively, so long as the link pulses are of sufficient size or amplitude.

Also, in the first and second embodiments above, the power supply control switches 9 and 29 include the FETs 9a and 29a, respectively. However, the present application is not limited to this. For example, the PHY ICs 2 and 22, the main controller 21a of the CPU 21, the memory 24, and the servo control unit 25 can be switched on and off by an element or electronic circuit other than an FET.

Also, in the first and second embodiments above, the main controller 21a of the CPU 21, the memory 24, and the servo control unit 25 are switched on and off based on the signal outputted from the sub-controller 21b of the CPU 21. However, the present application is not limited to this. For example, at least one of the main controller 21a of the CPU 21, the memory 24 and the servo control unit 25 can be switched on and off based on the signal outputted from the sub-controller 21b of the CPU 21. Furthermore, a device other than the main controller 21a of the CPU 21, the memory 24, and the servo control unit 25 can be switched on and off based on the signal outputted from the sub-controller 21b of the CPU 21.

In the illustrated embodiment, as discussed above, the LAN terminal 23 is an example of the local area network cable connector. The local area network cable connector is an example of the network cable connector. The PHY IC 22 (e.g., the communication signal processing circuit) is connected to the LAN terminal 23, and is configured to process a signal inputted through the LAN terminal 23 to the physical layer. With this configuration, when the LAN cable 200 (e.g., the local area network cable) is not connected to the LAN terminal 23, the PHY IC 22 that processes the signal inputted to the physical layer can be switched off. Thus, power efficiency can be easily improved.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A network apparatus comprising:
a network cable connector configured to be connected to a network cable;
a communication signal processing circuit configured to receive a signal inputted through the network cable connector; and
a binarizing circuit configured to compare the signal inputted through the network cable connector to the communication signal processing circuit with a specific reference potential such that the binarizing circuit is configured to binarize the signal to output one of first and second potentials, with the second potential being different from the first potential,
the communication signal processing circuit being configured to be switched on and off according to the one of the first and second potentials outputted from the binarizing circuit.

2. The network apparatus according to claim 1, further comprising
a direct current conversion circuit disposed between the network cable connector and the binarizing circuit, the direct current conversion circuit being configured to convert the signal inputted to the binarizing circuit into direct current,
the binarizing circuit being configured to output the one of the first and second potentials by comparing the signal converted into direct current by the direct current conversion circuit with the specific reference potential.

3. The network apparatus according to claim 2, wherein
the signal inputted through the network cable connector is a differential signal that is transmitted through a pair of signal wires.

4. The network apparatus according to claim 3, further comprising
an amplifier disposed between the network cable connector and the direct current conversion circuit, the amplifier being configured to amplify the differential signal inputted through the network cable connector.

5. The network apparatus according to any of claims 1 to 4, further comprising
a power supply control switch disposed between the binarizing circuit and the communication signal processing circuit,
the one of the first and second potentials outputted from the binarizing circuit being configured to be inputted to the power supply control switch,
the communication signal processing circuit being configured to be switched on and off by the power supply control switch.

6. The network apparatus according to any of claims 1 to 4, further comprising
a controller to which the one of the first and second potentials outputted from the binarizing circuit is configured to be inputted,
the communication signal processing circuit being configured be switched on and off based on a control signal outputted from the controller according to the one of the first and second potentials.

7. The network apparatus according to claim 6, further comprising
an electric device configured to be controlled by the controller,
the controller including a main controller and a sub-controller, the main controller being configured to control the electric device, the one of the first and second potentials outputted from the binarizing circuit being configured to be inputted to the sub-controller,
at least one of the main controller of the controller and the electric device is configured be switched on and off based on the control signal outputted from the sub-controller of the controller according to the one of the first and second potentials.

8. The network apparatus according to claim 7, further comprising
a power supply control switch disposed between the sub-controller of the controller and the communication signal processing circuit, the power supply control switch being configured to receive the control signal outputted from the sub-controller of the controller,
the communication signal processing circuit being configured to be switched on and off by the power supply control switch.

9. The network apparatus according to any of claims 1 to 8, wherein
the network cable connector includes a local area network cable connector, and
the communication signal processing circuit is connected to the local area network cable connector, the communication signal processing circuit being configured to process the signal inputted through the local area network cable connector to a physical layer.

10. The network apparatus according to claim 9, wherein
the signal inputted through the local area network cable connector includes link pulses.

11. The network apparatus according to any of claims 1 to 10, wherein
the second potential has a lower potential than the first potential,
the communication signal processing circuit being configured to be switched on while the binarizing circuit outputs the first potential, and configured to be switched off while the binarizing circuit outputs the second potential.
